# EUROPEAN PATENT APPLICATION

(11) **EP 4 142 408 A1**
(43) Date of publication of application: **01.03.2023**
(21) Application number: 21808065.3
(22) Date of filing: 07.05.2021
(51) Int. Cl.: H04W 72/12, H04W 28/04, H04L 1/18, H04W 76/28, H04W 76/14

(54) **METHOD AND DEVICE FOR PROCESSING SIDELINK OPERATION IN WIRELESS COMMUNICATION SYSTEM**

(30) Priority: 18.05.2020 KR 20200059324; 06.05.2021 KR 20210058779
(71) Applicant: Samsung Electronics Co., Ltd., Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Nederlandsch Octrooibureau
(86) International application number: PCT/KR2021/005748
(87) International publication number: WO 2021/235749

(57) **Abstract**

The present disclosure relates to a method and apparatus for processing a sidelink (SL) operation in a wireless communication system. An operating method of a first user equipment (UE) in a wireless communication system may include, when the first UE is in an radio resource control (RRC) connected state and is configured with discontinuous reception (DRX), monitoring a physical downlink control channel (PDCCH) transmitted from a base station (BS) during an active time associated with the DRX; detecting, based on the monitoring of the PDCCH, information associated with a SL resource allocated by the BS, identifying whether the SL resource is a resource for new transmission of a SL signal or a resource for re-transmission of the SL signal, when the SL resource is the resource for re-transmission of the SL signal, identifying whether a SL hybrid automatic repeat request (HARQ) feedback is enabled for a SL HARQ process of the first UE, when the SL HARQ feedback is enabled, receiving, from a second UE, SL HARQ feedback information about a SL signal transmitted from the first UE to the second UE, and reporting, to the BS, the received SL HARQ feedback information.

## Description

### TECHNICAL FIELD

The present disclosure relates to a wireless communication system, and more particularly, to a method and apparatus for processing a sidelink (SL) operation in a wireless communication system.

### BACKGROUND ART

In order to meet increasing demand with respect wireless data traffic after the commercialization of 4^{th} generation (4G) communication systems, efforts have been made to develop 5^{th} generation (5G) or pre-5G communication systems. For this reason, 5G or pre-5G communication systems are called 'beyond 4G network' communication systems or 'post long term evolution (post-LTE)' systems.

In order to achieve high data rates, implementation of 5G communication systems in an ultra-high frequency millimeter-wave (mmWave) band (e.g., a 60-gigahertz (GHz) band) is being considered. In order to reduce path loss of radio waves and increase a transmission distance of radio waves in the ultra-high frequency band for 5G communication systems, various technologies such as beamforming, massive multiple-input and multiple-output (massive MIMO), full-dimension MIMO (FD-MIMO), array antennas, analog beamforming, and large-scale antennas are being studied.

In order to improve system networks for 5G communication systems, various technologies such as evolved small cells, advanced small cells, cloud radio access networks (Cloud-RAN), ultra-dense networks, device-to-device communication (D2D), wireless backhaul, moving networks, cooperative communication, coordinated multi-points (CoMP), and received-interference cancellation have been developed.

In addition, for 5G communication systems, advanced coding modulation (ACM) technologies such as hybrid frequency-shift keying (FSK) and quadrature amplitude modulation (QAM) (FOAM) and sliding window superposition coding (SWSC), and advanced access technologies such as filter bank multi-carrier (FBMC), non-orthogonal multiple access (NOMA), and sparse code multiple access (SCMA) have been developed.

The Internet has evolved from a human-based connection network, where humans create and consume information, to the Internet of things (loT), where distributed elements such as objects exchange information with each other to process the information. Internet of everything (loE) technology has emerged, in which the loT technology is combined with, for example, technology for processing big data through connection with a cloud server. In order to implement the loT, various technological elements such as sensing technology, wired/wireless communication and network infrastructures, service interface technology, and security technology are required, such that, in recent years, technologies related to sensor networks for connecting objects, machine-to-machine (M2M) communication, and machine-type communication (MTC) have been studied. In the loT environment, intelligent Internet technology (IT) services may be provided to collect and analyze data obtained from connected objects to create new value in human life. As existing information technology (IT) and various industries converge and combine with each other, the loT may be applied to various fields such as smart homes, smart buildings, smart cities, smart cars or connected cars, smart grids, health care, smart home appliances, and advanced medical services.

Various attempts are being made to apply 5G communication systems to the loT network. For example, technologies related to sensor networks, M2M communication, and MTC are being implemented by using 5G communication technology using beamforming, MIMO, and array antennas. Application of cloud radio access network (Cloud-RAN) as the above-described big data processing technology may be an example of convergence of 5G communication technology and loT technology.

Also, user equipment (UE) direct communication (also referred to as sidelink (SL) communication) using the 5G communication system is being studied, and it is expected that the UE direct communication is applied to vehicle communication (vehicle-to-everything (V2X)) and thus provides various services to users.

### DESCRIPTION OF EMBODIMENTS

### SOLUTION TO PROBLEM

The present disclosure provides a method and apparatus for processing a sidelink (SL) operation in a wireless communication system

Also, the present disclosure provides a method and apparatus for processing control information required for SL data transmission and reception in a discontinuous reception (DRX) mode of a user equipment (UE) in a wireless communication system.

Also, the present disclosure provides a method and apparatus for processing control information required for SL data transmission and reception in bandwidth part (BWP) inactivation of a UE in a wireless communication system.

### BRIEF DESCRIPTION OF DRAWINGS

FIG. 1 illustrates a wireless communication system according to one or more embodiments of the present disclosure.
FIG. 2 illustrates a configuration of a base station (BS) in a wireless communication system according to an embodiment of the present disclosure.
FIG. 3 illustrates a configuration of a user equipment (UE) in a wireless communication system according to an embodiment of the present disclosure.
FIG. 4 illustrates a configuration of a communicator in a wireless communication system according to an embodiment of the present disclosure.
FIG. 5 illustrates a structure of radio time-frequency resources of a wireless communication system according to an embodiment of the present disclosure.
FIG. 6A illustrates a scenario for sidelink (SL) communication according to an embodiment of the present disclosure.
FIG. 6B illustrates a scenario for SL communication according to an embodiment of the present disclosure.
FIG. 6C illustrates a scenario for SL communication according to an embodiment of the present disclosure.
FIG. 6D illustrates a scenario for SL communication according to an embodiment of the present disclosure.
FIG. 7A is a diagram for describing a transmission scheme of SL communication according to an embodiment of the present disclosure.
FIG. 7B is a diagram for describing a transmission scheme of SL communication according to an embodiment of the present disclosure.
FIG. 8 is a diagram illustrating an operation in which a UE in a discontinuous reception (DRX) mode processes SL resource allocation information according to an embodiment of the present disclosure.
FIG. 9 is a diagram illustrating an operation in which a UE in a DRX mode processes SL resource allocation information according to an embodiment of the present disclosure.
FIG. 10 is a diagram illustrating an operation in which a UE in a DRX mode processes SL resource allocation information according to an embodiment of the present disclosure.
FIG. 11 is a diagram illustrating an operation in which a UE in a DRX mode processes SL resource allocation information according to an embodiment of the present disclosure.
FIG. 12A is a diagram illustrating an operation in which a UE in a DRX mode processes SL resource allocation information according to an embodiment of the present disclosure.
FIG. 12B is a diagram illustrating an operation in which a UE in a DRX mode processes SL resource allocation information according to an embodiment of the present disclosure.

### BEST MODE

According to an embodiment of the present disclosure, an operating method of a first user equipment (UE) in a wireless communication system may include, when the first UE is in an radio resource control (RRC) connected state, is configured with discontinuous reception (DRX), and is configured with sidelink (SL) resource allocation mode 1, monitoring a physical downlink control channel (PDCCH) transmitted from a base station (BS) during an active time associated with the DRX, detecting, based on the monitoring of the PDCCH, information associated with a SL resource allocated by the BS, identifying whether the SL resource is a resource for new transmission of a SL signal or a resource for re-transmission of the SL signal, when the SL resource is the resource for re-transmission of the SL signal, identifying whether a SL hybrid automatic repeat request (HARQ) feedback is enabled for a SL HARQ process of the first UE, when the SL HARQ feedback is enabled, receiving, from a second UE, SL HARQ feedback information about a SL signal transmitted from the first UE to the second UE, reporting, to the BS, the received SL HARQ feedback information, and in response to the reporting, starting a SL HARQ round trip time (RTT) timer associated with the DRX.

According to an embodiment of the present disclosure, a first UE in a wireless communication system may include a transceiver, and at least one processor configured to, when the first UE is in an RRC connected state, is configured with DRX, and is configured with SL resource allocation mode 1, monitor a PDCCH transmitted from a BS during an active time associated with the DRX, detect, based on the monitoring of the PDCCH, information associated with a SL resource allocated by the BS, identify whether the SL resource is a resource for new transmission of a SL signal or a resource for re-transmission of the SL signal, when the SL resource is the resource for re-transmission of the SL signal, identify whether a SL HARQ feedback is enabled for a SL HARQ process of the first UE, when the SL HARQ feedback is enabled, receive, from a second UE via the transceiver, SL HARQ feedback information about a SL signal transmitted from the first UE to the second UE, report, to the BS via the transceiver, the received SL HARQ feedback information, and in response to the reporting, start a SL HARQ RTT timer associated with the DRX.

### MODE OF DISCLOSURE

Hereinafter, exemplary embodiments of the present disclosure will now be described more fully with reference to the accompanying drawings. Here, it should be noted that the same reference numerals denote the same components in the accompanying drawings. Also, detailed descriptions of well-known functions and configurations which may obscure the present disclosure are not provided.

In the following descriptions of embodiments, descriptions of techniques that are well known in the art and are not directly related to the present disclosure are omitted. By omitting unnecessary descriptions, the essence of the present disclosure may not be obscured and may be explicitly conveyed.

For the same reason, some components in the drawings are exaggerated, omitted, or schematically illustrated. Also, size of each component does not exactly correspond to an actual size of each component. In each drawing, components that are the same or are in correspondence are rendered the same reference numeral.

Advantages and features of the present disclosure and methods of accomplishing the same may be understood more readily by reference to the following detailed descriptions of embodiments and accompanying drawings of the present disclosure. The present disclosure may, however, be embodied in many different forms and should not be construed as being limited to the embodiments set forth herein. Rather, these embodiments are provided so that this disclosure will be thorough and complete, and will fully convey the concept of the present disclosure to one of ordinary skill in the art. Therefore, the scope of the present disclosure is defined by the appended claims. Throughout the specification, like reference numerals refer to like components.

It will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed via the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner, such that the instructions stored in the computer-executable or computer-readable memory may produce an article of manufacture including instruction means that perform the functions specified in the flowchart block(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "... unit" as used in the present embodiment refers to a software or hardware component, such as field-programmable gate array (FPGA) or application-specific integrated circuit (ASIC), which performs certain tasks. However, the term "... unit" does not mean to be limited to software or hardware. A "... unit" may be configured to be in an addressable storage medium or configured to operate one or more processors. Thus, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "... units" may be combined into fewer components and "... units" or further separated into additional components and "... units". Further, the components and "... units" may be implemented to operate one or more central processing units (CPUs) in a device or a secure multimedia card.

When particularly describing embodiments of the present disclosure, a New RAN (NR) that is a radio access network and a packet core (5G System, 5G Core Network, or NG Core: Next Generation Core) that is a core network in 5G mobile communication standards defined by 3GPP that is a mobile communication standard organizing group are main targets, but the essential concept of the present disclosure may be modified without departing from the scope of the present disclosure and may be applied to other communication system based on similar technical backgrounds, and the application may be made based on determination by one of ordinary skill in the art.

In the 5G system, a network data collection and analysis function (NWDAF) may be defined to support network automation, the NWDAF referring to a network function for providing a function to analyze and provide data collected over a 5G network. The NWDAF may collect/store/analyze information from the 5G network and may provide a result to an unspecified network function (NF), and an analysis result may be independently used by each NF.

For convenience of descriptions, the present disclosure uses some of terms and names defined in the 3rd Generation Partnership Project (3GPP) long term evolution (LTE) standards (standards of 5G, NR, LTE, or similar system). However, the present disclosure is not limited to these terms and names, and may be equally applied to communication systems conforming to other standards.

Hereinafter, the present disclosure relates to a method and apparatus for processing a sidelink (SL) operation in a discontinuous reception (DRX) mode of a user equipment (UE) in a wireless communication system. In detail, the present disclosure provides a method, performed by the UE in the DRX mode, of processing SL data transmission resource allocation information, and the method may be applied to a case where sidelink mode 1 is operated to receive, from a base station (BS), a resource required for initial transmission and re-transmission of SL data. During an active time of the DRX mode, the UE may monitor an SL data initial transmission or re-transmission resource allocation control signal from the BS. When the UE in the DRX mode determines that there is no need to monitor the SL data initial transmission or re-transmission resource allocation control signal from the BS, for example, when the UE receives, from the BS, a resource allocation control signal indicating DL data new transmission, the UE may start a DRX inactivity timer. The method of the present disclosure may be applied to a case where sidelink mode 1 in which the UE receives, from the BS, allocation of a resource required for initial transmission and re-transmission of SL data when the UE runs a bandwidth part (BWP) inactivity timer. When the UE determines that the UE receives, from the BS, the SL data initial transmission or re-transmission resource allocation control signal on an active BWP, the UE may start a BWP inactivity timer corresponding to the active BWP.

According to an embodiment of the present disclosure, the UE does not need to unnecessarily monitor downlink (DL) signaling indicating an SL resource in the DRX mode or on an inactive BWP, and thus, power consumption of the UE may be decreased.

Hereinafter, terms indicating signals, terms indicating channels, terms indicating control information, terms indicating network entities, terms indicating components of apparatuses, and the like, as used in the following description, are exemplified for convenience of descriptions. Accordingly, the present disclosure is not limited to terms to be described below, and other terms indicating objects having equal technical meanings may be used.

In the descriptions below, the terms "physical channel" and "signal" may be interchangeably used with "data" or "control signal." For example, a physical downlink shared channel (PDSCH) is a term that indicates a physical channel on which data is transmitted, however, the PDSCH may also refer to data. That is, in the present disclosure, the expression "transmit a physical channel" may have the same meaning as the expression "transmit data or a signal via a physical channel".

Hereinafter, in the present disclosure, higher layer signaling may refer to a method of transferring a signal to a UE from a BS on a DL data channel of a physical layer or to the BS from the UE on an uplink (UL) data channel of the physical layer. The higher layer signaling may be understood as radio resource control (RRC) signaling or a media access control (MAC) control element (CE).

In the present disclosure, the expressions such as "exceeding" or "less than" are used to determine whether a particular condition is satisfied or fulfilled, but the expressions may not exclude meaning of "equal to or greater than" or "equal to or less than". A condition written with "equal to or greater than" may be replaced with "exceeding", a condition with "equal to or less than" may be replaced with "less than", and a condition with "equal to or greater than... and less than..." may be replaced with "exceeding... and equal to or less than...".

Also, in the present disclosure, one or more embodiments will now be described by using terms and names defined in some communication standards (e.g., the 3GPP), but the present disclosure is not limited to the terms and names. One or more embodiments of the present disclosure may be easily modified and applied to other communication systems.

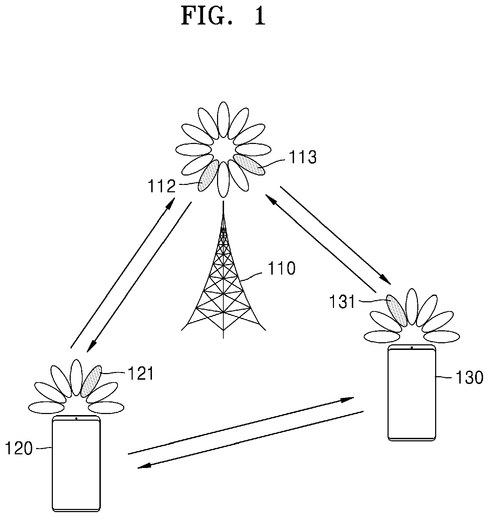

FIG. 1 illustrates a wireless communication system according to one or more embodiments of the present disclosure.

FIG. 1 illustrates a BS 110, a UE 120, and a UE 130, as parts of nodes using wireless channels in the wireless communication system. While FIG. 1 illustrates only one BS, another BS same as or similar to the BS 110 may be further present.

The BS 110 may refer to a network infrastructure providing a wireless access to the UEs 120 and 130. The BS 110 has coverage defined as a preset geographical region based on a range for transmitting a signal. The BS 110 may also be referred to as an access point (AP), an eNodeB (eNB), a 5G node, a next generation nodeB (gNB), a wireless point, transmission/reception point (TRP), or another term having same technical meaning, as well as a BS.

The UE 120 and the UE 130 respectively refer to devices used by users and perform communication with the BS 110 via the wireless channels. A link from the BS 110 to the UE 120 or the UE 130 is referred to as a DL, and a link from the UE 120 or the UE 130 to the BS 110 is referred to as a UL. Also, the UE 120 and the UE 130 may perform communication via a wireless channel therebetween. Here, a link between the UE 120 and the UE 130 is referred to as an SL, and the SL may be referred to as a PC5 interface. In some cases, at least one of the UE 120 and the UE 130 may be operated without user-involvement. That is, at least one of the UE 120 and the UE 130 may be a device performing machine type communication (MTC) and may not be carried by a user. Each of the UE 120 and the UE 130 may be referred to as a terminal, a mobile station, a subscriber station, a remote terminal, a wireless terminal, a user device, a station (STA) or another term having same technical meaning, as well as a UE.

The BS 110, the UE 120, and the UE 130 may transmit and receive a wireless signal in a millimeter-wave (mmWave) band (e.g., 28GHz, 30GHz, 38GHz, and/or 60GHz). In this regard, in order to increase a channel gain, the BS 110, the UE 120, and the UE 130 may perform beamforming. Here, the beamforming may include transmission beamforming and reception beamforming. That is, the BS 110, the UE 120, and the UE 130 may apply directivity to a transmission signal or a reception signal. To this end, the BS 110 and the UEs 120 and 130 may select serving beams 112, 113, 121, and 131 via a beam search procedure or a beam management procedure. After the serving beams 112, 113, 121, and 131 are selected, communication thereafter may be performed on a resource in a quasi co-located (QCL) relation with a resource that transmitted the serving beams 112, 113, 121, and 131.

If large-scale features of a channel transmitted a symbol on a first antenna port can be inferred from a channel transmitted a symbol on a second antenna port, it may be determined that the first antenna port and the second antenna port are QCLed with each other. For example, the large-scale features may include at least one of delay spread, Doppler spread, Doppler shift, average gain, average delay, and a spatial receiver parameter.

The UE 120 and the UE 130 shown in FIG. 1 may support vehicle communication. For vehicle communication, standardization with respect to a vehicle-to-everything (V2X) technology in the LTE system has been completed in 3GPP Rel-14 and Rel-15 based on device-to-device (D2D) communication architecture, and currently, 5G NR-based V2X is being developed. NR V2X is to support unicast communication, groupcast (or multicast) communication, and broadcast communication between UEs. Also, unlike LTE V2X aimed for transmission and reception of basic safety information for driving of vehicles on roads, NR V2X is aimed to provide further advanced services such as platooning, advanced driving, extended sensor, remote driving, and the like.

A V2X service may be divided into basic safety services and advanced services. The basic safety services may include detailed services, such as a cooperative awareness message (CAM) or a basic safety message (BSM) service, a left-turn notification service, a front vehicle collision warning service, an emergency vehicle approach notification service, a front obstacle warning service, and an intersection signal information service, and V2X information may be transmitted/received by using a broadcast, unicast, or groupcast transmission method. In the advanced services, quality of service (QoS) requirements may be strengthened than in the basic safety services, and in order to transmit/receive V2X information within a specific vehicle group or to transmit/receive V2X information between two vehicles, methods of transmitting/receiving V2X information by using unicast and groupcast transmission methods other than the broadcast transmission method are required. The advanced services may include detailed services, such as a platooning service, an autonomous driving service, a remote driving service, and an extended sensor-based V2X service.

Hereinafter, an SL refers to a transmission/reception path for a signal between UEs, and the SL may be interchangeably used with a PC5 interface. Hereinafter, a BS is an entity that allocates a resource to a UE, and may support both V2X communication and general cellular communication or may support only V2X communication. That is, the BS may refer to an NR BS (e.g., a gNB), an LTE BS (e.g., an eNB), or a road site unit (RSU). A UE (or terminal) may include not only a general UE or an MS, but also include a vehicle supporting vehicle-to-vehicle (V2V) communication, a vehicle or a pedestrian's handset (e.g., a smartphone) supporting a vehicle-to-pedestrian (V2P) communication, a vehicle supporting vehicle-to-network (V2N) communication, a vehicle supporting vehicle-to-infrastructure (V2I) communication, an RSU having embedded therein a UE function, an RSU having embedded therein a BS function, or an RSU having embedded therein a part of the BS function and a part of the UE function. In addition, a V2X UE used in the following descriptions may be referred to as a UE. That is, in association with V2X communication, the UE may be used as the V2X UE.

The BS and the UE may be connected to each other through a Uu interface. A UL refers to a radio link via which the UE transmits data or a control signal to the BS, while a DL refers to a radio link via which the BS transmits data or a control signal to the UE.

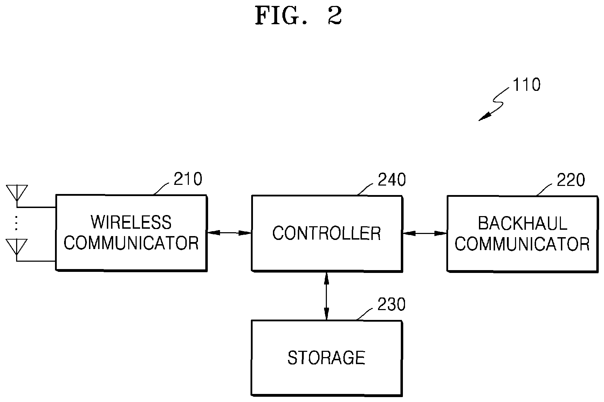

FIG. 2 illustrates a configuration of a BS in a wireless communication system according to an embodiment of the present disclosure. The configuration shown in FIG. 2 may be understood as a configuration of the BS 110. The term 'unit' or '...er/or' used herein indicates a unit, which processes at least one function or operation, and may be implemented in hardware or software, or in a combination of hardware and software.

Referring to FIG. 2, the BS 110 may include a wireless communicator 210, a backhaul communicator 220, a storage 230, and a controller 240.

The wireless communicator 210 may perform functions for transmitting/receiving a signal via a wireless channel. For example, the wireless communicator 210 may perform conversion between a baseband signal and a bit string based on physical layer specifications of a system. For example, during data transmission, the wireless communicator 210 generates complex symbols by encoding and modulating a transmission bit string. Also, during data reception, the wireless communicator 210 reconstructs a reception bit string by demodulating and decoding a baseband signal.

The wireless communicator 210 up-converts a baseband signal into a radio frequency (RF) band signal and then transmits the RF band signal through an antenna, and down-converts an RF band signal received through the antenna, into a baseband signal. To this end, the wireless communicator 210 may include a transmission filter, a reception filter, an amplifier, a mixer, an oscillator, a digital-to-analog convertor (DAC), an analog-to-digital convertor (ADC), or the like. Also, the wireless communicator 210 may include a plurality of transmission and reception paths. Furthermore, the wireless communicator 210 may include at least one antenna array including a plurality of antenna elements.

In terms of hardware, the wireless communicator 210 may be configured as a digital unit and an analog unit, and the analog unit may be configured as a plurality of sub-units depending on operating power, an operating frequency, or the like. The digital unit may be configured as at least one digital signal processor (DSP).

The wireless communicator 210 transmits and receives signals as described above. Accordingly, all parts or some parts of the wireless communicator 210 may be referred to as a transmitter, a receiver, or a transceiver. Also, in the descriptions below, transmission and reception performed via a wireless channel indicate that the aforementioned processing performed by the wireless communicator 210 is applied thereto.

The backhaul communicator 220 may provide an interface for performing communication with other nodes in a network. That is, the backhaul communicator 220 may convert a bit string to a physical signal, the bit string being transmitted from the BS 110 to another node, e.g., another access node, another BS, an upper node, a core network, and the like, and may convert a physical signal to a bit string, the physical signal being received from another node.

The storage 230 stores basic programs, application programs, and data, e.g., configuration information, for operations of the BS 110. The storage 230 may be configured as a volatile memory, a non-volatile memory, or a combination of a volatile memory and a non-volatile memory. Furthermore, the storage 230 provides stored data, in response to a request by the controller 240.

The controller 240 controls overall operations of the BS 110. For example, the controller 240 transmits and receives signals via the wireless communicator 210 or the backhaul communicator 220. Also, the controller 240 records data to or reads data from the storage 230. The controller 240 may perform functions of a protocol stack which are requested by the communication rules. According to another embodiment, the protocol stack may be included in the wireless communicator 210. To this end, the controller 240 may include at least one processor. According to one or more embodiments, the controller 240 may control the BS 110 to perform operations according to one or more embodiments to be described below.

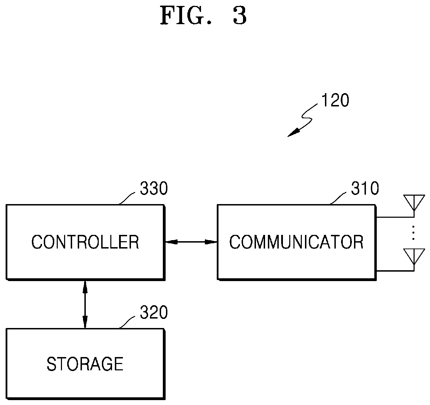

FIG. 3 illustrates a configuration of a UE in a wireless communication system according to an embodiment of the present disclosure.

The configuration shown in FIG. 3 may be understood as a configuration of the UE 120. The term 'unit' or '...er/or' used herein indicates a unit, which processes at least one function or operation, and may be implemented in hardware or software, or in a combination of hardware and software.

Referring to FIG. 3, the UE 120 includes a communicator 310, a storage 320, and a controller 330.

The communicator 310 performs functions for transmitting/receiving a signal via a wireless channel. For example, the communicator 310 performs conversion between a baseband signal and a bit string based on physical layer specifications of a system. For example, during data transmission, the communicator 310 generates complex symbols by encoding and modulating a transmission bit string. Also, during data reception, the communicator 310 reconstructs a reception bit string by demodulating and decoding a baseband signal. Also, the communicator 310 up-converts a baseband signal into a RF band signal and then transmits the RF band signal through an antenna, and down-converts an RF band signal received through the antenna, into a baseband signal. To this end, the communicator 310 may include a transmission filter, a reception filter, an amplifier, a mixer, an oscillator, a DAC, an ADC, or the like.

Also, the communicator 310 may include a plurality of transmission and reception paths. Furthermore, the communicator 310 may include at least one antenna array including a plurality of antenna elements. In terms of hardware, the communicator 310 may be configured as a digital unit and an analog unit,. In this regard, the digital unit and the analog unit may be implemented as one package. Also, the communicator 310 may include a plurality of RF chains. Furthermore, the communicator 310 may perform beamforming.

The communicator 310 transmits and receives signals as described above. Accordingly, all parts or some parts of the communicator 310 may be referred to as a transmitter, a receiver, or a transceiver. Also, in the descriptions below, transmission and reception performed via a wireless channel indicate that the aforementioned processing performed by the communicator 310 is applied thereto.

The storage 320 stores basic programs, application programs, and data, e.g., configuration information, for operations of the UE 120. The storage 320 may be configured as a volatile memory, a non-volatile memory, or a combination of a volatile memory and a non-volatile memory. Furthermore, the storage 320 provides stored data, in response to a request by the controller 330.

The controller 330 controls overall operations of the UE 120. For example, the controller 330 transmits and receives signals via the communicator 310. Also, the controller 330 records data to or reads data from the storage 320. The controller 330 may perform functions of a protocol stack which are requested by the communication rules. To this end, the controller 330 may include at least one processor or microprocessor or may be a part of a processor. Also, a part of the communicator 310 and the controller 330 may be referred to as a communication processor (CP). According to one or more embodiments, the controller 330 may control the UE 120 to perform operations according to one or more embodiments to be described below.

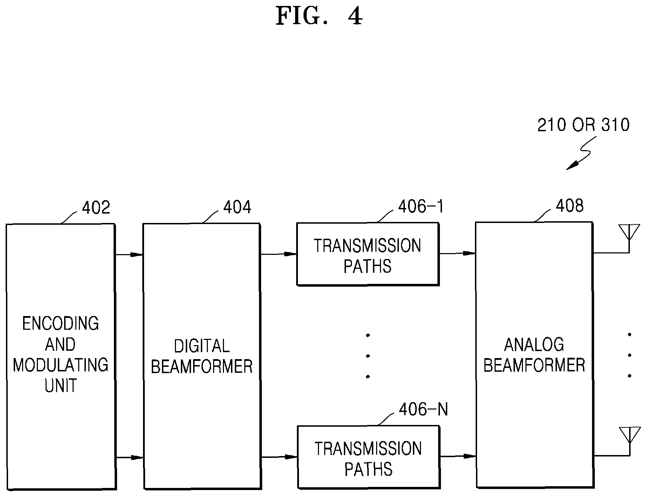

FIG. 4 illustrates a configuration of a communicator in a wireless communication system according to an embodiment of the present disclosure.

FIG. 4 illustrates an example of a detailed configuration of the wireless communicator 210 of FIG. 2 or the communicator 310 of FIG. 3. In detail, as part of the wireless communicator 210 of FIG. 2 or the communicator 310 of FIG. 3, FIG. 4 illustrates elements for performing beamforming.

Referring to FIG. 4, the wireless communicator 210 or the communicator 310 includes an encoding and modulating unit 402, a digital beamformer 404, a plurality of transmission paths 406-1 to 406-N, and an analog beamformer 408.

The encoding and modulating unit 402 performs channel encoding. For the channel encoding, at least one of low density parity check (LDPC) codes, convolution codes, and polar codes may be used. The encoding and modulating unit 402 generates modulated symbols by performing constellation mapping.

The digital beamformer 404 performs beamforming on a digital signal (e.g., the modulated symbols). To this end, the digital beamformer 404 multiplies the modulated symbols by beamforming weights. In this regard, the beamforming weights may be used to change the magnitude and phase of a signal and may be referred to as a precoding matrix, a precoder, and the like. The digital beamformer 404 outputs modulated symbols that are digitally-beamformed to the plurality of transmission paths 406-1 to 406-N. Here, according to a multiple input multiple output (MIMO) transmission technique, the modulated symbols may be multiplexed or same modulated symbols may be provided to the plurality of transmission paths 406-1 to 406-N.

The plurality of transmission paths 406-1 to 406-N converts digitally-beamformed digital signals to analog signals. To this end, each of the plurality of transmission paths 406-1 to 406-N may include an inverse fast Fourier transform (IFFT) operator, a cyclic prefix (CP) inserter, a DAC, and an up-converter. The CP inserter is arranged for an orthogonal frequency division multiplexing (OFDM) scheme, and may be excluded when a different physical layer scheme (e.g., filter bank multi-carrier (FBMC)) is applied. That is, the plurality of transmission paths 406-1 to 406-N provides independent signal processing processes to a plurality of streams generated through digital beamforming. However, depending on implementation methods, some elements of the plurality of transmission paths 406-1 to 406-N may be shared.

The analog beamformer 408 performs beamforming on analog signals. To this end, the digital beamformer 404 multiplies the analog signals by beamforming weights. In this regard, the beamforming weights are used to change the magnitude and phase of a signal. In particular, the analog beamformer 408 may be variously configured, based on connection structures between the plurality of transmission paths 406-1 to 406-N and antennas. For example, each of the plurality of transmission paths 406-1 to 406-N may be connected to one antenna array. As another example, the plurality of transmission paths 406-1 to 406-N may be connected to one antenna array. As another example, the plurality of transmission paths 406-1 to 406-N may be adaptively connected to one antenna array or at least two antenna arrays.

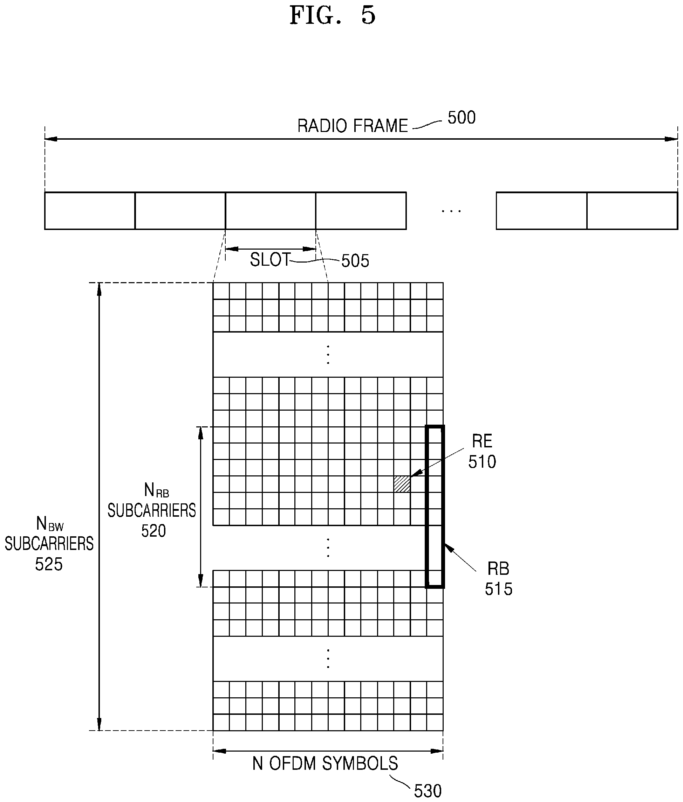

FIG. 5 illustrates a structure of radio time-frequency resources of a wireless communication system according to an embodiment of the present disclosure.

Referring to FIG. 5, in a radio resource region, the horizontal axis represents a time domain and the vertical axis represents a frequency domain. A minimum transmission unit in the time domain is an OFDM symbol or a discrete Fourier transform-spreading (DFT-S)-OFDM symbol, and one slot 505 may include N_{symb} OFDM symbols or DFT-S-OFDM symbols 530. Unlike a slot, in an NR system, a length of a subframe may be defined as 1.0 ms, and a length of a radio frame 500 may be defined as 10 ms. A minimum transmission unit in the frequency domain is a subcarrier, and a bandwidth of a full system transmission band may include a total of N_{BW} subcarriers 525. Specific numerical values, such as N_{symb} and N_{BW} may vary according to a system.

A basic unit in a time-frequency resource domain is a resource element (RE) 510, and the RE 510 may be represented by an OFDM symbol index or by a DFT-S-OFDM symbol index and a subcarrier index. A resource block (RB) 515 may be defined as N_{RB} consecutive subcarriers 520 in the frequency domain. In general, a minimum transmission unit of data is an RB unit, and in the NR system, it is generally N_{symb} = 14 and N_{RB} = 12.

The structure of the radio time-frequency resources as shown in FIG. 5 is applied to a Uu interface. Also, the structure of the radio time-frequency resources as shown in FIG. 5 may be similarly applied to an SL.

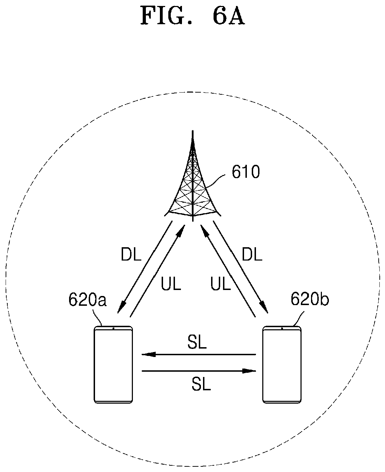

FIG. 6A illustrates an example of a scenario for SL communication according to an embodiment of the present disclosure.

FIG. 6A illustrates an in-coverage scenario in which SL UEs 620a and 620b are located within coverage of a BS 610. The SL UEs 620a and 620b may receive data and control information from the BS 610 via a DL or may transmit data and control information to the BS via a UL. In this case, the data and control information may data and control information for SL communication or may be data and control information for general cellular communication other than SL communication. Also, in FIG. 6A, the SL UEs 620a and 620b may transmit and receive data and information for SL communication via an SL.

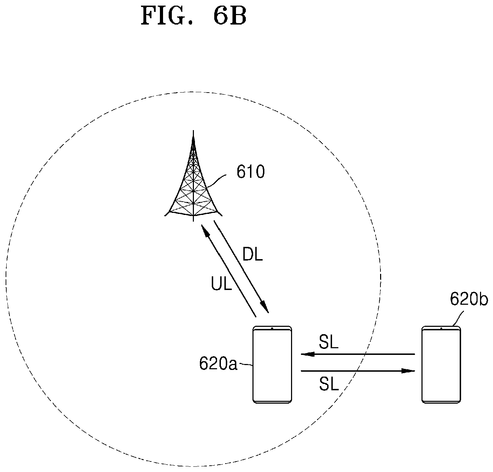

FIG. 6B illustrates an example of a scenario for SL communication according to an embodiment of the present disclosure.

Referring to FIG. 6B, provided is partial coverage in which, among SL UEs, a first UE 620a is located within coverage of the BS 610 and a second UE 620b is located outside of the coverage of the BS 610. The first UE 620a located within the coverage of the BS 610 may receive data and control information from the BS via a DL or may transmit data and control information to the BS via a UL. The second UE 620b located outside of the coverage of the BS 610 cannot receive data and control information from the BS via a DL and cannot transmit data and control information to the BS via a UL. The second UE 620b may transmit and receive data and control information for SL communication to and from the first UE 620a via an SL.

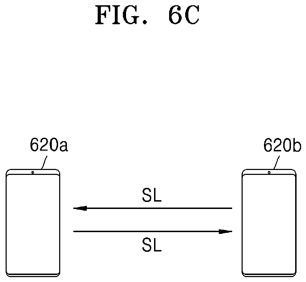

FIG. 6C illustrates an example of a scenario for SL communication according to an embodiment of the present disclosure.

Referring to FIG. 6C, provided is a case where SL UEs (e.g., the first UE 620a and the second UE 620b) are located outside of coverage of a BS. Accordingly, the first UE 620a and the second UE 620b cannot receive data and control information from the BS via a DL and cannot transmit data and control information to the BS via a UL. The first UE 620a and the second UE 620b may transmit and receive data and control information for SL communication via an SL.

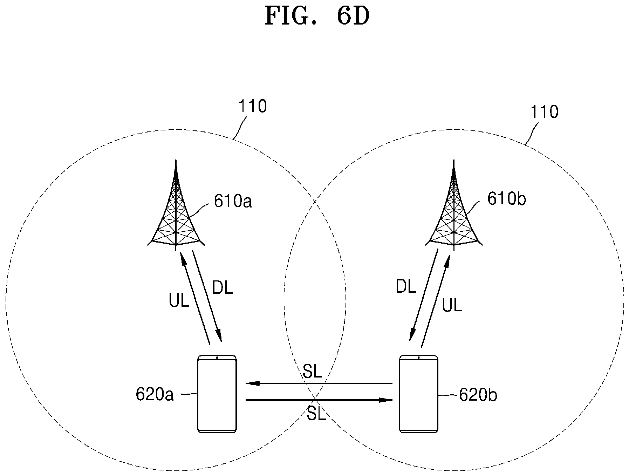

FIG. 6D illustrates an example of a scenario for SL communication according to an embodiment of the present disclosure.

Referring to FIG. 6D, the first UE 620a and the second UE 620b performing SL communication may perform inter-cell SL communication in a connected state (e.g., an RRC connected state) with respect to different BSs (e.g., a first BS 610a and a second BS 610b) or in a camped-on state (e.g., an RRC connection release state, i.e., an RRC idle state). In this case, the first UE 620a may be an SL transmission UE, and the second UE 620b may be an SL reception UE. Alternatively, the first UE 620a may be an SL reception UE, and the second UE 620b may be an SL transmission UE. The first UE 620a may receive an SL dedicated system information block (SIB) from a BS 610a to which the first UE 620a is connected (or on which the first UE 620a camps), and the second UE 620b may receive an SL dedicated SIB from another BS 610b to which the second UE 620b is connected (or on which the second UE 620b camps). In this case, information about the SL dedicated SIB received by the first UE 620a may be different from information about the SL dedicated SIB received by the second UE 620b. Accordingly, a plurality of pieces of information need to be unified to perform SL communication between UEs located in different cells.

In the aforementioned examples of FIGS. 6A to 6D, for convenience of descriptions, an SL system configured of two UEs (e.g., the first UE 620a and the second UE 620b) is described as an example, but the present disclosure is not limited thereto and may be applied to an SL system in which two or more UEs participate. Also, a UL and a DL between the BSs 610, 610a, and 610b and the SL UEs 620a and 620b may be referred to as a Uu interface, and an SL between SL UEs may be referred to as a PC5 interface. In the following descriptions, a UL or DL and a Uu interface, and an SL and PC5 may be interchangeably used.

In addition, in the present disclosure, the UE may refer to a vehicle supporting V2V communication, a vehicle or the pedestrian's handset (e.g., a smartphone) supporting V2P communication, a vehicle supporting V2N communication, or a vehicle supporting V2I communication. Also, in the present disclosure, the UE may refer to an RSU having embedded therein a UE function, an RSU having embedded therein a BS function, or an RSU having embedded therein a part of the BS function and a part of the UE function.

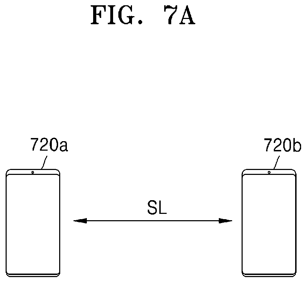

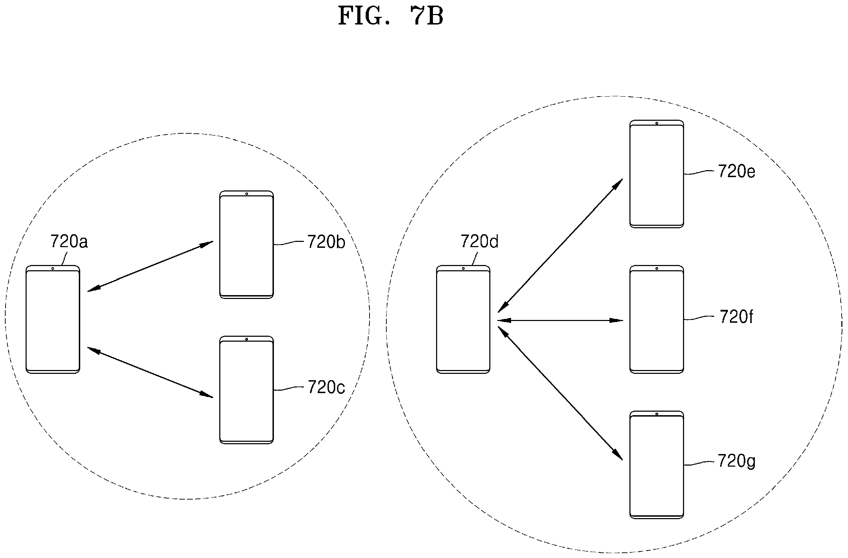

FIGS. 7A and 7B are diagrams for describing a transmission scheme of SL communication according to an embodiment of the present disclosure.

In detail, FIG. 7A illustrates a unicast scheme, and FIG. 7B illustrates a groupcast scheme.

Referring to FIG. 7A, a transmission UE 720a and a reception UE 720b may perform one-to-one communication. The transmission scheme as shown in FIG. 7A may be referred to as unicast communication. Referring to FIG. 7B, a transmission UE 720a or 720d and reception UEs 720b, 720c, 720e, 720f, and 720g may perform one-to-many communication. The transmission scheme as shown in FIG. 7B may be referred to as groupcast or multicast. In FIG. 7B, the first UE 720a, the second UE 720b, and the third UE 720c may form one group and may perform groupcast communication, and the fourth UE 720d, the fifth UE 720e, the sixth UE 720f, and the seventh UE 720g may form another group and may perform groupcast communication. The UEs may perform groupcast communication within a group to which the UEs belong, and may perform unicast, groupcast, or broadcast communication with one or more other UEs belonging to different groups. For convenience of descriptions, two groups are illustrated in FIG. 7B, but the present disclosure is not limited thereto and may be applied to a case where a larger number of groups are formed.

In addition, although not shown in FIG. 7A or 7B, SL UEs may perform broadcast communication. The broadcast communication refers to a scheme by which all SL UEs receive data and control information transmitted by an SL transmission UE via an SL. For example, in FIG. 7B, when the first UE 720a is a transmission UE, other UEs 720b, 720c, 720d, 720e, 720f, and 720g may receive data and control information transmitted by the first UE 720a.

The aforementioned SL unicast communication, groupcast communication, and broadcast communication may be supported in an in-coverage scenario, a partial-coverage scenario, or an out-of-coverage scenario.

In the case of an NR SL, unlike an LTE SL, support for a transmission type in which a vehicle UE transmits data only to one specific UE via unicast and a transmission type in which the vehicle UE transmits data to a plurality of specific UEs via groupcast may be considered. For example, when considering a service scenario such as platooning that is a technique of connecting two or more vehicles to one network and allowing the vehicles to move together in a cluster, the unicast and groupcast techniques may be useful. In detail, unicast communication may be used for a leader UE of a group connected by platooning so as to control one specific UE, and groupcast communication may be used to simultaneously control a group consisting of a plurality of specific UEs.

The following method may be used for resource allocation in a V2X system.

### (1) Mode 1 resource allocation

Scheduled resource allocation is a method by which the BS allocates, by a dedicated scheduling scheme, resources to be used for SL transmission to RRC-connected UEs. The scheduled resource allocation method may be effective for interference management and resource pool management (dynamic allocation and/or semi-persistent transmission) because the BS can manage SL resources. When there is data to be transmitted to other UE(s), a UE in an RRC connected mode may transmit, to the BS, information indicating the presence of the data to be transmitted to the other UE(s), by using an RRC message or an MAC CE. For example, the RRC message transmitted by the UE to the BS may include an SidelinkUElnformation or UEAssistancelnformation message, and the MAC CE may correspond to a buffer status report (BSR) MAC CE including at least one of an indicator indicating a BSR for V2X communication and information about the size of data buffered for SL communication, a scheduling request (SR), or the like.

### (2) Mode 2 resource allocation

Second, UE autonomous resource selection is a method by which an SL transmission/reception resource pool for V2X is provided to a UE as system information or an RRC message (e.g., an RRCReconfiguration message or a PC5-RRC message), and the UE selects a resource pool and resources according to a defined rule. The UE autonomous resource selection may correspond to one or a plurality of methods among the following resource allocation methods.
> A UE autonomously selects an SL resource for transmission.
> A UE assists SL resource selection for other UEs.
> A UE is configured with NR configured grant for SL transmission.
> A UE schedules SL transmission of other UEs.

- UE resource selection methods may include zone mapping, sensing-based resource selection, random selection, and the like.
- In addition, even if the UE exists in coverage of the BS, resource allocation or resource selection may not be performed in a scheduled resource allocation or UE autonomous resource selection mode. In this case, the UE may perform V2X SL communication via a preconfigured SL transmission/reception resource pool.
- Also, when UEs for V2X communication exist outside of the coverage of the BS, the UE may perform V2X SL communication via a preconfigured SL transmission/reception resource pool.

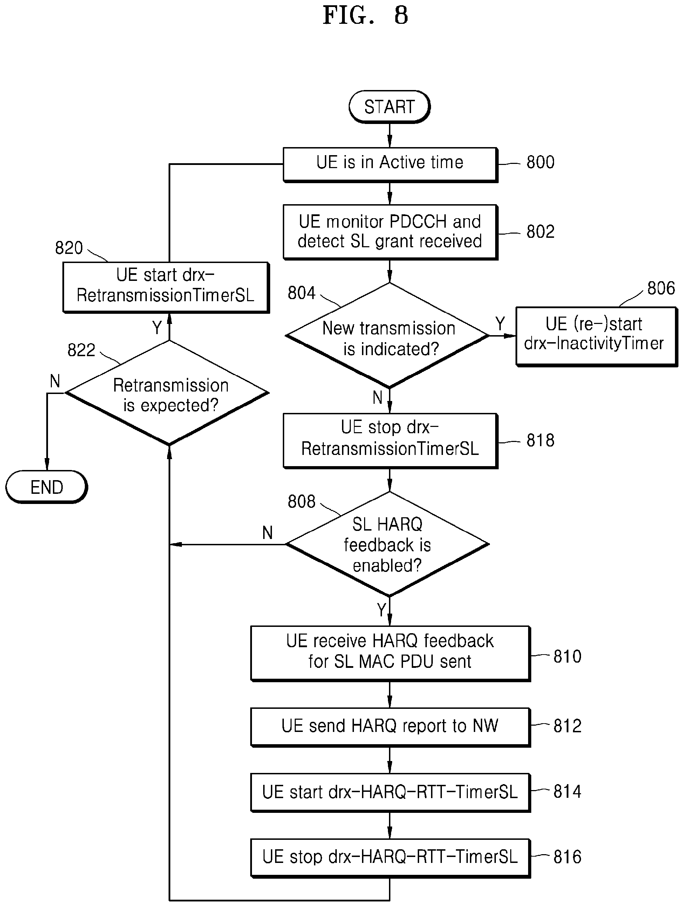

FIG. 8 is a diagram illustrating an operation in which a UE in a DRX mode processes SL resource allocation information according to an embodiment of the present disclosure.

Referring to FIG. 8, in a case where a DRX mode is configured for the UE in an RRC connected state and SL mode 1 resource allocation is configured, in operation 800, the UE may determine whether an active time is running.

In operation 802, the UE may monitor DL control signaling from a BS, and may determine whether a SL transmission resource is allocated. For example, the DL control signaling from the BS may include a physical downlink control channel (PDCCH). DL resource allocation indication in the DL control signaling may be determined by using a SL identifier of the UE, e.g., a sidelink radio network temporary identifier (SL-RNTI) or a sidelink configured scheduling RNTI (SL-CS-RNTI). That is, the UE may monitor the PDCCH, and may detect reception of SL grant indicating the DL resource allocation indication.

In operation 804, the UE may determine whether an allocated SL transmission resource indicated by the DL control signaling is for new transmission. That is, the UE may determine whether the DL resource allocation indication indicated by the PDCCH is for new transmission. Afterward, in operation 804, the UE may newly transmit or re-transmit a SL MAC PDU by using the resource allocated in operation 804. In an embodiment, when it is determined that the SL transmission resource is for new transmission, in operation 806, the UE may start (or re-start) a DRX inactivity timer. When the UE receives at least one of a DRX Command MAC CE or a Long DRX Command MAC CE, the UE may stop the DRX inactivity timer. When the UE determines that the DRX inactivity timer is expired and a DRX cycle (long DRX cycle or short DRX cycle) is configured, the UE may apply the configured DRX cycle.

Based on the determination in operation 804, when it is determined that the SL transmission resource is for re-transmission, in operation 808, the UE may determine whether a SL hybrid automatic repeat request (SL HARQ) feedback is configured for a HARQ process. That is, the UE may determine whether the SL HARQ feedback is enabled.

When it is determined that the SL transmission resource is for re-transmission in operation 804, that is, when the UE determines that SL grant for SL MAC PDU re-transmission is obtained from the BS, in operation 818, the UE may stop drx-RetransmissionTimerSL.

According to an embodiment, in a case where drx-RetransmissionTimerSL is not running, even when it is determined that the SL transmission resource is for re-transmission, the UE may perform operation 808 without performing operation 818. Alternatively, in a case where drx-RetransmissionTimerSL is running, when it is determined that the SL transmission resource is for re-transmission, the UE may stop drx-RetransmissionTimerSL in operation 818.

In an embodiment, when the SL HARQ feedback is configured for the HARQ process, a transmission UE may determine to perform re-transmission, based on a HARQ feedback from a reception UE. Then, the UE may perform operation 810. Here, the UE may obtain a HARQ feedback from the reception UE in operation 810. The HARQ feedback may be used to indicate acknowledgement (ACK) or non-acknowledgement (NAK). Alternatively, the HARQ feedback may be used only to indicate NAK. That is, in operation 810, the UE may receive the HARQ feedback with respect to SL MAC PDU (SL MAC PDU) transmission.

In operation 812, the UE may report, to the BS, the HARQ feedback in operation 810. According to an embodiment, the BS may be referred to as a network (NW).

In operation 814, the UE may start drx-HARQ-Round Trip Time (RTT)-TimerSL. Here, the drx-HARQ-RTT-TimerSL may indicate a minimum time for the BS to process a HARQ feedback report received from the UE (the minimum duration before a SL grant for HARQ retransmission is expected by the MAC entity). The drx-HARQ-RTT_TimerSL may run for each SL HARQ process.

In operation 816, the UE may stop the drx-HARQ-RTT-TimerSL.

In operation 822, the UE may determine whether re-transmission is requested. For example, when the UE determines that the HARQ feedback obtained from the reception UE indicates NAK and that there is a need to re-transmit a SL MAC PDU to the reception UE, the UE may determine that re-transmission is requested. When the UE determines that there is a need to re-transmit the SL MAC PDU to the reception UE, in operation 820, the UE may start drx-RetransmissionTimerSL so as to wait for SL grant to be allocated, from the BS, for SL MAC PDU re-transmission. Then, the UE may wait for SL grant, from the BS, for SL MAC PDU re-transmission, by performing operations 800 and 802. As described above, the UE may determine whether an allocated SL transmission resource indicated by DL control signaling in operation 804 is for new transmission. In a case where it is determined that the SL transmission resource is for re-transmission according to the determining in operation 804, when the UE in operation 818 determines that the SL grant for SL MAC PDU re-transmission is obtained from the BS, the UE may stop the drx-RetransmissionTimerSL.

In an embodiment, in operation 822, when the UE determines that there is no need to re-transmit the SL MAC PDU to the reception UE, the UE may stop operation.

In an embodiment, when it is determined that the SL HARQ feedback is not configured for the HARQ process, according to the determining in operation 808, that is, when the SL HARQ feedback is disabled, the UE may determine whether to perform re-transmission, based on a re-transmission configuration value, without the HARQ feedback from the reception UE. The UE may start drx-RetransmissionTimerSL so as to wait for SL grant to be allocated, from the BS, for SL MAC PDU re-transmission. Here, the UE may proceed to operation 800 and then operation 802, thereby monitoring whether resource allocation for new transmission or re-transmission is indicated. For example, the UE may monitor a PDCCH in operation 802, and may detect reception of SL grant indicating SL resource allocation indication. When the UE determines reception of the SL grant for SL MAC PDU re-transmission, the UE may stop the drx-RetransmissionTimerSL.

When a DRX mode is configured for the UE that performs SL-based data transmission and reception according to an embodiment of the present disclosure, an active time may include the followings. That is, the UE may monitor a PDCCH in the active time when the DRX mode is configured, and an embodiment included in the active time in which monitoring of the PDCCH may be performed includes the followings. Here, drx-RetransmissionTimerSL and Scheduling request for SL-SCH may be used when SL mode 1 resource allocation is configured.
- drx-onDurationTimer or drx-InactivityTimer or drx-RetransmissionTimerDL or drx-RetransmissionTimerUL or ra-Contention Resolution Timer or drx-RetransmissionTimerSL is running; or
- a Scheduling Request is sent on PUCCH and is pending (i.e., a Scheduling Request is triggered and not cancelled) (e.g., Scheduling Request includes a SL (SL-SCH) transmission resource request) (a scheduling request is transmitted on a PUCCH and is pending (i.e., the scheduling request is triggered and is not cancelled)); or
- a PDCCH indicating a new transmission addressed to the C-RNTI of the MAC entity has not been received after successful reception of a Random Access Response for the Random Access Preamble not selected by the MAC entity among the contention-based Random Access Preamble (a PDCCH indicating new transmission addressed to C-RNTI of the MAC entity is waited for after successful reception of a random access response with respect to a random access preamble not selected by the MAC entity from among the contention-based random access preamble).

In an embodiment, drx-RetransmissionTimerSL may indicate a maximum time until a resource allocated for SL transmission is obtained (the maximum duration until a grant for sidelink transmission is received). drx-RetransmissionTimerSL may run for each SL HARQ process. drx-RetransmissionTimerSL may run when SL MAC PDU re-transmission is requested.

According to an embodiment of the present disclosure, configuration information necessary for the UE to obtain SL mode 1 resource allocation in the DRX mode may be delivered by dedicated RRC signaling, e.g., an RRCReconfiguration message or an RRCConnectionReconfiguration message, which is transmitted from the BS to the UE. An example of the configuration information necessary for the UE to obtain SL mode 1 resource allocation in the DRX mode is as shown in Table 1 below.

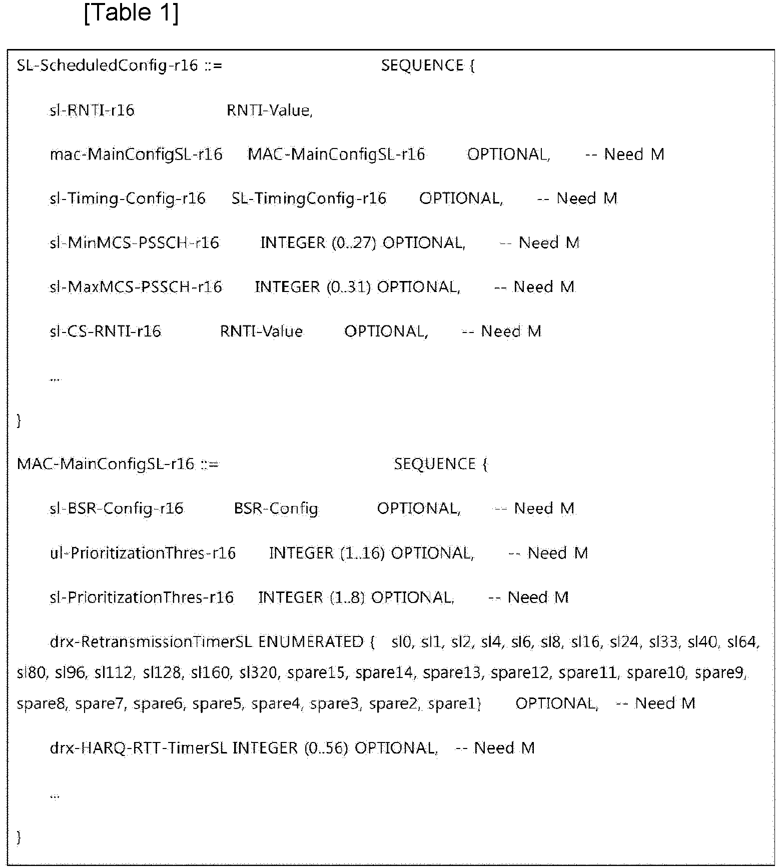

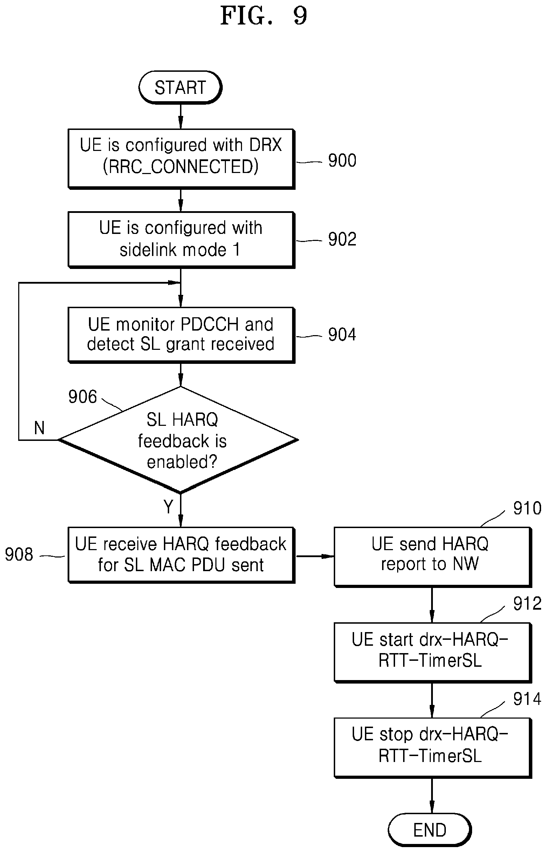

FIG. 9 is a diagram illustrating an operation in which a UE in a DRX mode processes SL resource allocation information according to an embodiment of the present disclosure.

Referring to FIG. 9, in operation 900, the UE in an RRC connected state may determine that a DRX mode is configured.

In operation 902, the UE may determine that SL mode 1 resource allocation is configured.

In operation 904, the UE may monitor DL control signaling (e.g., PDCCH) from a BS, and may determine whether a SL transmission resource is allocated. Afterward, the UE may newly transmit or re-transmit a SL MAC PDU by using the SL transmission resource allocated in operation 904. That is, in operation 904, the UE may monitor the PDCCH, and may detect reception of SL grant indicating DL resource allocation indication.

In operation 906, the UE may determine whether a SL HARQ feedback is configured for a HARQ process. That is, the UE may determine whether the SL HARQ feedback is enabled.

In an embodiment, when the SL HARQ feedback is configured for the HARQ process, a transmission UE may determine to perform re-transmission, based on a HARQ feedback from a reception UE. Then, the UE may perform operation 908. In this case, the UE may obtain a HARQ feedback from the reception UE in operation 908. The HARQ feedback may be used to indicate ACK or NAK. Alternatively, the HARQ feedback may be used only to indicate NAK. That is, in operation 908, the UE may receive the HARQ feedback with respect to SL MAC PDU (SL MAC PDU) transmission.

In operation 910, the UE may report the obtained HARQ feedback to the BS.

In operation 912, the UE may start drx-HARQ-RTT-TimerSL. Here, the dr>c-HARQ-RTT-TimerSL may indicate a minimum time for the BS to process a HARQ feedback report received from the UE (the minimum duration before a SL grant for HARQ retransmission is expected by the MAC entity). The drx-HARQ-RTT_TimerSL may run for each SL HARQ process.

In operation 914, the UE may stop the drx-HARQ-RTT-TimerSL.

In an embodiment, when it is determined that the SL HARQ feedback is not configured for the HARQ process, according to the determining in operation 906, that is, when the SL HARQ feedback is disabled, the UE may determine whether to perform re-transmission, based on a re-transmission configuration value, without the HARQ feedback from the reception UE. Here, the UE may proceed to operation 904, thereby monitoring whether resource allocation for new transmission or re-transmission is indicated. For example, the UE may monitor a PDCCH in operation 904, and may detect reception of SL grant indicating SL resource allocation indication. For example, in operation 904, the UE may monitor a PDCCH, and may detect reception of SL grant indicating DL resource allocation indication. When the UE determines that SL MAC PDU re-transmission is requested (e.g., whether MAC PDU re-transmission is requested is determined based on a maximum HARQ retransmission number configured for a corresponding HARQ process), the UE may start drx-RetransmissionTimerSL so as to wait for a PDCCH with respect to SL grant by which the BS indicates a SL MAC PDU re-transmission resource, and may stop the drx-RetransmissionTimerSL when the UE obtains a PDCCH indicating SL MAC PDU re-transmission resource allocation with respect to the HARQ process. The embodiments of FIGS. 8 and 9 describe operations in which the UE processes drx-RetransmissionTimerSL and drx-HARQ-RTT-TimerSL, in consideration of all cases where a HARQ feedback report reported from the UE to the BS includes Acknowledgement or Non-acknowledgement. According to an embodiment, Non-acknowledgement may be referred to as NAK or NACK.

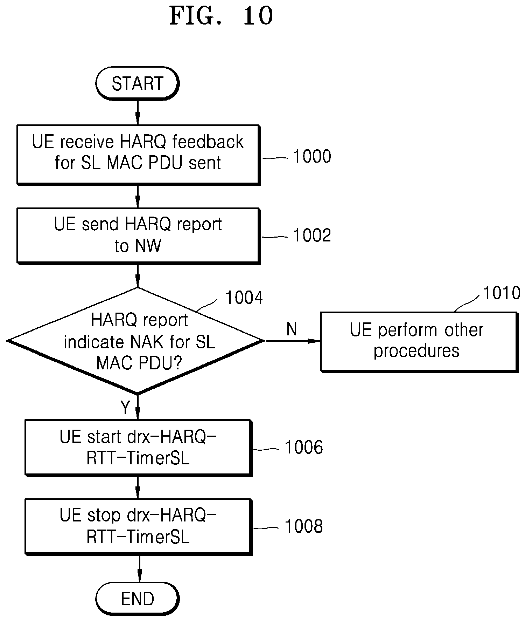

According to an embodiment of the present disclosure, an embodiment of an operation in which the UE processes drx-RetransmissionTimerSL and drx-HARQ-RTT-TimerSL only for a case where a HARQ feedback report reported from the UE to the BS includes Non-acknowledgement will now be described with reference to FIG. 10.

FIG. 10 is a diagram illustrating an operation in which a UE in a DRX mode processes SL resource allocation information according to an embodiment of the present disclosure.

Referring to FIG. 10, when SL mode 1 resource allocation is configured and a DRX mode is configured for the UE, in operation 1000, the UE may determine that a HARQ feedback with respect to a SL MAC PDU transmitted to a reception UE is obtained. That is, the UE may receive the HARQ feedback with respect to transmission of the SL MAC PDU. An operation in operation 1000 may be performed with respect to a HARQ process for which a feedback-based HARQ is configured, and the SL MAC PDU corresponding to the HARQ process.

In operation 1002, the UE may transmit a HARQ feedback report to a BS. That is, the UE may report, to the BS, the HARQ feedback in operation 1000. In an embodiment, the HARQ feedback report may be referred to as a HARQ report or a HARQ feedback.

In operation 1004, the UE may determine whether the HARQ feedback report indicates non-acknowledgement with respect to the SL MAC PDU. When the HARQ feedback report indicates non-acknowledgement with respect to the SL MAC PDU, in operation 1006, the UE may start drx-HARQ-RTT-TimerSL. Here, the drx-HARQ-RTT-TimerSL may indicate a minimum time for the BS to process a HARQ feedback report received from the UE (the minimum duration before a SL grant for HARQ retransmission is expected by the MAC entity). According to an embodiment, the drx-HARQ-RTT_TimerSL may run for each SL HARQ process.

In operation 1008, the UE may stop the drx-HARQ-RTT-TimerSL.

According to an embodiment, when the UE determines that the HARQ feedback report does not indicate non-acknowledgement with respect to the SL MAC PDU in operation 1004, that is, when the UE determines that the HARQ feedback report indicates acknowledgement with respect to the SL MAC PDU, the UE may perform operation 1010.

In operation 1010, the UE may perform a different procedure. For example, the UE may perform an operation of transmitting a new MAC PDU. Also, the UE may perform an operation of re-transmitting a MAC PDU, based on a re-transmission configuration value, with respect to a HARQ process for which a feedback-based HARQ is not configured.

In a case where the UE performs the operation of re-transmitting a MAC PDU, based on a re-transmission configuration value, with respect to a HARQ process for which a feedback-based HARQ is not configured, when the UE determines that SL MAC PDU re-transmission is requested (e.g., whether MAC PDU re-transmission is requested is determined based on a maximum HARQ retransmission number configured for the corresponding HARQ process), the UE may start drx-RetransmissionTimerSL so as to wait for a PDCCH with respect to SL grant by which the BS indicates a SL MAC PDU re-transmission resource, and may stop the drx-RetransmissionTimerSL when the UE obtains a PDCCH indicating SL MAC PDU re-transmission resource allocation with respect to the HARQ process.

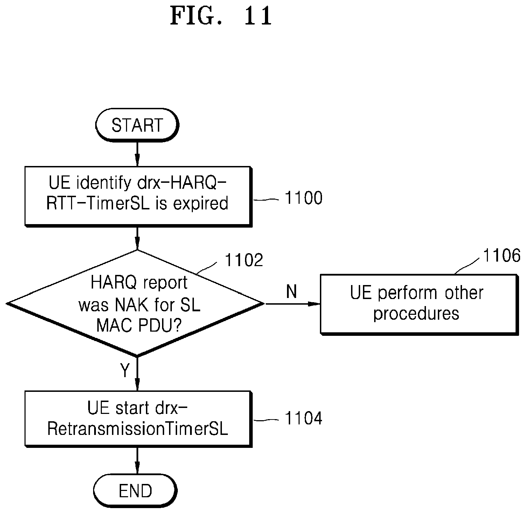

FIG. 11 is a diagram illustrating an operation in which a UE in a DRX mode processes SL resource allocation information according to an embodiment of the present disclosure.

Referring to FIG. 11, in operation 1100, the UE may determine whether dr>c-HARQ-RTT-TimerSL that has been running is stopped. That is, the UE may determine whether the drx-HARQ-RTT-TimerSL that has been running is expired.

In operation 1102, the UE may determine whether a HARQ feedback report indicates non-acknowledgement with respect to a SL MAC PDU. That is, the UE may determine whether the HARQ feedback report with respect to the SL MAC PDU transmitted to a BS indicates non-acknowledgement. According to the determining in operation 1102, when it is determined that the HARQ feedback report indicates non-acknowledgement, the UE may start drx-RetransmissionTimerSL in operation 1104. Alternatively, according to the determining in operation 1102, when the UE determines that the HARQ feedback report does not indicate non-acknowledgement, that is, when the UE determines that the HARQ feedback report indicates acknowledgement, the UE may perform operation 1106.

In operation 1106, the UE may perform a different procedure. For example, the UE may perform an operation of transmitting a new MAC PDU. Alternatively, the UE may perform an operation of re-transmitting a MAC PDU, based on a re-transmission configuration value, with respect to a HARQ process for which a feedback-based HARQ is not configured.

In a case where the UE performs the operation of re-transmitting a MAC PDU, based on a re-transmission configuration value, with respect to a HARQ process for which a feedback-based HARQ is not configured, when the UE determines that SL MAC PDU re-transmission is requested (e.g., whether MAC PDU re-transmission is requested is determined based on a maximum HARQ retransmission number configured for the corresponding HARQ process), the UE may start drx-RetransmissionTimerSL so as to wait for a PDCCH with respect to SL grant by which the BS indicates a SL MAC PDU re-transmission resource, and may stop the drx-RetransmissionTimerSL when the UE obtains a PDCCH indicating SL MAC PDU re-transmission resource allocation with respect to the HARQ process.

According to embodiments of the present disclosure which are described with reference to FIGS. 8, 9, 10, and 11, the UE configured with SL mode 1 resource allocation in a DRX mode may perform a procedure of Table 2.

**[Table 2]**

| |
|---|
| When a DRX cycle is configured, the Active Time includes the time while: |
| - drx-onDurationTimer or drx-inactivityTimer or drx-RetransmissionTimerDL or drx-RetransmissionTimerUL or ra-ContentionResoiutionTimer or drx-RetransmissionTimerSL is running; or |
| - a Scheduling Request is sent on PUCCH and is pending (including Scheduling request for SL-SCH Data transfer); or |
| - a PDCCH indicating a new transmission addressed to the GFNTI of the MAC entity nas not been received after successful reception of Random a Random Access Response for the Random Access Preamble not selected by the MAC entity among the contention-based Access Preamble. |
| |
| 1> if the MAC entity is in Active Time: |
| 2> monitor the PDCCH as specified in TS 38.213 [6]; |
| 2> if the PDCCP indicates a St transmission and SI HARQ feedback is enabled |
| 3> start the drx-HARQ-RTT-TimerSL for the corresponding HARQ process in the first symbol after the end of the corresponding transmission carrying the SL HARQ feedback; |
| 3> stop the drx RetransmissionTimerSL for the corresponding HARQ process. |
| |
| 1> if a MAC PDU is transmitted in a configured sidelink grant; 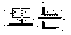 (if a SL HARQ feedback is transmitted in a configured uplink grant;) |
| 2> start the drx-HARQ-RTT_TimerSL for the corresponding HARQ process in the first symbol after the end of the corresponding transmission carrying the SL HARQ feedback; |
| 2> stop the drx RetransmissionTimerSL for the corresponding HARQ process |
| 1> if a drx-HARQ-RTT_TimerSL expires: |
| 2> if the data of the corresponding HARQ process was not successfully decoded: |
| 3> start the drx-RetransmissionTimerSL for the corresponding HARQ process in the first symbol after the expiry of drx-HARQ-RTT_TimerSL |
| |
| The MAC entity may be configured by RRC with a DRX functionality that controls the UE's PDCCH monitoring activity for the MAC entity's C-RNTI, CI-RNTI, CS-RNTI, INT-RNTJ, SFI-RNTI, SP-CSI-RNTI, TPC-PUCCH-RNTI, TPC-PUSCH-RNTI, and TPC-SRS-RNTI, SL-RNTI (if configured), SL-CS-RNTI (if configured). |
| 1> if the MAC entity is in Active Time: |
| 2> monitor the PDCCH; |
| 2> if the PDCCH indicates a new transmission (DL or UL, SL): |
| 3> start or restart drx InactivityTimer in the first symbol after the end of the PDCCH reception. |

According to an embodiment of the present disclosure, when the UE processes SL mode 1 resource allocation configuration in the DRX mode, the UE may not run a HARQ RTT timer (drx-HARQ-RTT-TimerSL) for a HARQ feedback report transmitted to the BS but may run drx-RetransmissionTimerSL that corresponds to a timer for waiting for resource allocation for SL MAC PDU re-transmission from the BS. Here, the drx-RetransmissionTimerSL may run only when the UE determines that resource allocation for SL MAC PDU re-transmission from the BS is requested.

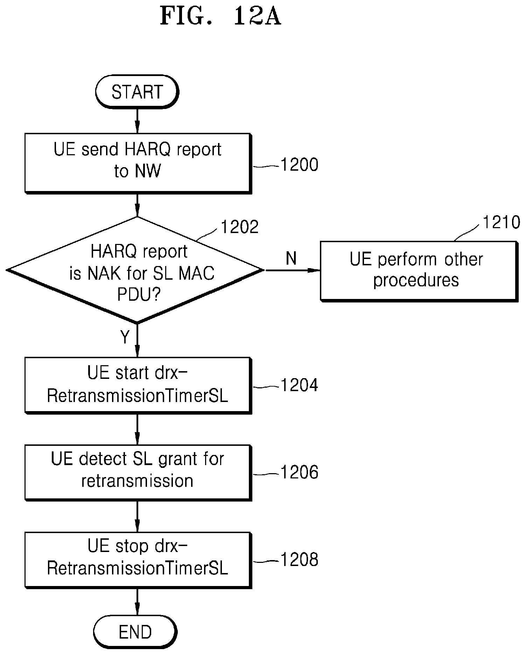

FIG. 12A is a diagram illustrating an operation in which a UE in a DRX mode processes SL resource allocation information according to an embodiment of the present disclosure.

Referring to FIG. 12A, in operation 1200, the UE may transmit a HARQ feedback report to a BS. That is, the UE may report a HARQ report to the BS.

In operation 1202, the UE may determine whether the HARQ feedback report indicates non-acknowledgement with respect to a SL MAC PDU. According to the determining in operation 1202, when it is determined that the HARQ feedback report indicates non-acknowledgement, the UE may start drx-RetransmissionTimerSL in operation 1204.

In operation 1206, the UE may determine that a resource for SL MAC PDU re-transmission is allocated from the BS. That is, the UE may detect SL grant indication for the SL MAC PDU re-transmission. For example, the UE may monitor a PDCCH, thereby detecting the SL grant indication for the SL MAC PDU re-transmission.

In operation 1208, the UE may stop the drx-RetransmissionTimerSL.

According to the determining in operation 1202, when it is determined that the HARQ feedback report does not indicate non-acknowledgement, that is, when it is determined that the HARQ feedback report indicates acknowledgement, the UE may perform operation 1210.

In operation 1210, the UE may perform a different procedure. For example, the UE may perform an operation of newly transmitting a SL MAC PDU. Alternatively, the UE may perform an operation of re-transmitting a MAC PDU, based on a re-transmission configuration value, with respect to a HARQ process for which a feedback-based HARQ is not configured.

In a case where the UE performs the operation of re-transmitting a MAC PDU, based on a re-transmission configuration value, with respect to a HARQ process for which a feedback-based HARQ is not configured, when the UE determines that SL MAC PDU re-transmission is requested (e.g., whether MAC PDU re-transmission is requested is determined based on a maximum HARQ retransmission number configured for the corresponding HARQ process), the UE may start drx-RetransmissionTimerSL so as to wait for a PDCCH with respect to SL grant by which the BS indicates a SL MAC PDU re-transmission resource, and may stop the drx-RetransmissionTimerSL when the UE obtains a PDCCH indicating SL MAC PDU re-transmission resource allocation with respect to the HARQ process.

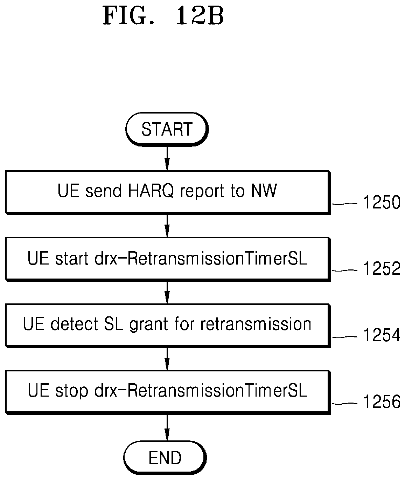

FIG. 12B is a diagram illustrating an operation in which a UE in a DRX mode processes SL resource allocation information according to an embodiment of the present disclosure.

Referring to FIG. 12B, in operation 1250, the UE may transmit a HARQ feedback report to a BS.

In operation 1252, the UE may start drx-RetransmissionTimerSL.

In operation 1254, the UE may determine that a resource for SL MAC PDU re-transmission is allocated from the BS. That is, the UE may detect SL grant indication for the SL MAC PDU re-transmission. For example, the UE may monitor a PDCCH, thereby detecting the SL grant indication for the SL MAC PDU re-transmission.

In operation 1256, the UE may stop the drx-RetransmissionTimerSL.

As described with reference to FIGS. 12A and 12B, according to embodiments of the present disclosure, the UE configured with a DRX mode and SL mode 1 resource allocation may perform a procedure of Table 3.

**[Table 3]**

| |
|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP)CSI-RNTI, TPC-PUCCH RNTI, TPC-PUSCH-RNTI, and TPC-SRS-RNTI, SL-RNTI (if configured), SL-CS-RNTI (if configured). |
| 1> if the MAC entity is in Active Time: |
| 2> monitor the PDCCH; |
| 2> if the PDCCH indicates a new transmission (DL or UL, SL): |
| 3> start or restart drx-InactivityTimer in the first symbol after the end of the PDCCH reception |
| |
| When a DRX cycle is configured, the Active Time includes the time while: |
| - drx-onDurationTimer or drx-InactivityTimer or drx-RetransmissionTimerDL or drx-RetransmissionTimerUL or ra-ContentionResolutionTimer or drx RetransmissionTimerSL is running; or |
| - a Scheduling Request is sent on PUCCH and is pending (including Scheduling request for SL-SCH Data transfer); or |
| - a PDCCH indicating a new transmission addressed to the C-RNTI of the MAC entity has not been received after successful reception of a Random Access Response for the Random Access Preamble not selected by the MAC entity among the contention-based Random Access Preamble. |
| |
| 1> if the MAC entity is in Active Time: |
| 2> monitor the PDCCH as specified in TS 38.213 [6]; |
| 2> if the PDCCP indicates a SL transmission and SL HARQ feedback is enabled; |
| 3> start the drx-RetransmissionTimerSL for the corresponding HARQ process in the first symbol after the end of the corresponding transmission carrying the SL HARQ feedback; |
| 3> stop the drx RetransmissionTimerSL for the corresponding HARQ process after receiving SL grant for retransmission |
| |
| 1> if a MAC PDU is transmitted in a configured sidelink grant; 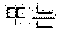 (if a SL HARQ feedback is transmitted in a configured uplink grant;) |
| 2> start the drx RetransmissionTimerSL for the corresponding HARQ process in the first symbol after the end of the corresponding transmission carrying the SL HARQ feedback; |
| 2> stop the drx-RetransmissionTimerSL for the corresponding HARQ process after receiving SL grant for retransmission |
| |
| 1> if the data of the corresponding HARQ process was not successfully decoded: |
| 2> start the drx-RetransmissionTimerSL for the corresponding HARQ process in the first symbol after the end of the corresponding transmission carrying the SL HARQ feedback; |
| 2> stop the drx-RetransmissionTimerSL for the corresponding HARQ process after receiving SL grant for retransmission |

According to an embodiment of the present disclosure, an operation in which the UE processes a SL operation for a serving cell configured with bwp-lnactivityTimer when an inactive BWP is operated is as a procedure of Table 4. Because SL mode 1 resource allocation is configured for the UE, the UE may obtain, from the BS, a SL resource for new-transmission or re-transmission of a SL MAC PDU. DL control signaling (e.g., PDCCH) transmitted from the BS may indicate, by a SL identifier (SL-RNTI or SL-CS-RNTI) of the UE, a SL transmission resource to be allocated to the UE.

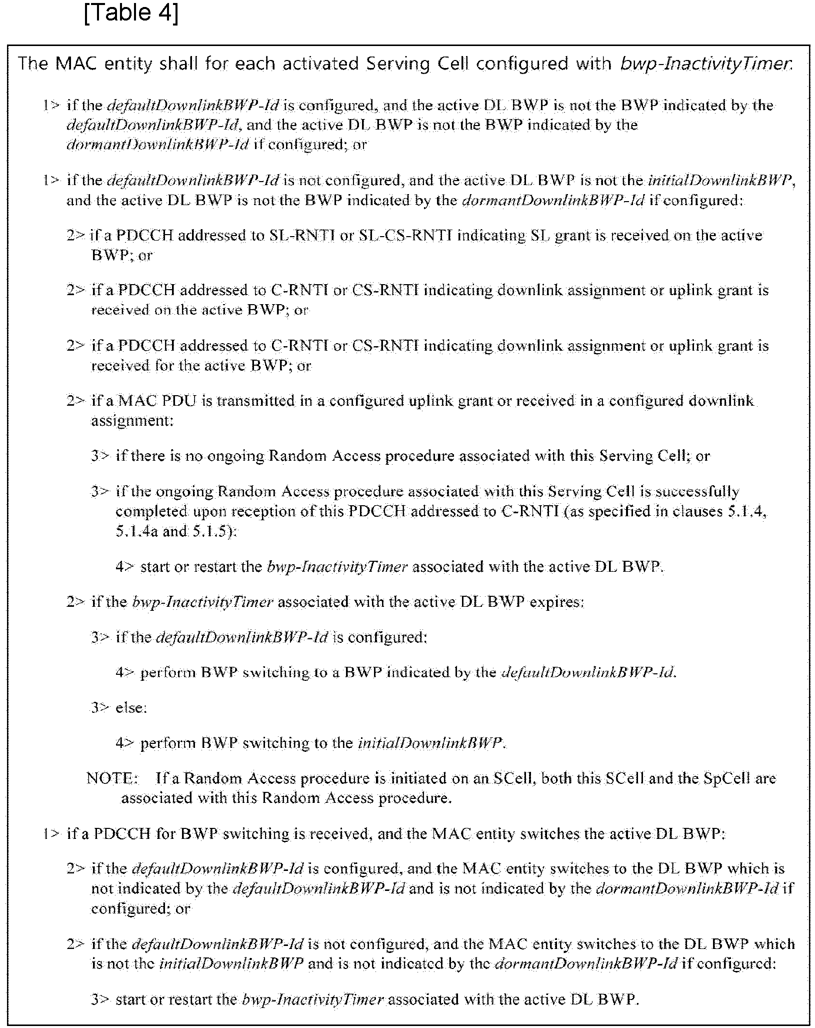

According to an embodiment of the present disclosure, a method, performed by the UE in a DRX mode, of processing SL information in a wireless communication system may include starting a DRX inactivity timer (drx-lnactivityTimer) when the UE is allocated a resource for new SL transmission, determining whether to monitor SL re-transmission resource allocation during an active time, running a SL re-transmission resource allocation waiting timer when the monitoring of the SL re-transmission resource allocation during the active time is requested, and determining the SL re-transmission resource allocation during the active time.

The present disclosure relates to a method, performed by a UE configured with SL mode 1 resource allocation in a DRX mode, of processing resource allocation for transmission or re-transmission of a SL MAC PDU in a wireless communication system, the method including determining whether SL transmission resource allocation is obtained, by monitoring DL control signaling from a BS during an active time of the DRX mode, transmitting, to the BS, a HARQ feedback report with respect to a SL MAC PDU, and determining whether a SL MAC PDU re-transmission resource is obtained, transmitting, to the BS, the HARQ feedback report with respect to the SL MAC PDU, and determining to run a processing timer with respect to the report, determining not to run a timer for waiting for re-transmission resource obtainment when the HARQ feedback report with respect to the SL MAC PDU indicates acknowledgement, and determining to run the timer for waiting for re-transmission resource obtainment when the HARQ feedback report with respect to the SL MAC PDU indicates non-acknowledgement.

According to an embodiment of the present disclosure, an operating method of a first UE in a wireless communication system, when the first UE is in an RRC connected state, is configured with DRX, and is configured with SL resource allocation mode 1, may include: monitoring a PDCCH transmitted from a BS during an active time associated with the DRX; detecting, based on the monitoring of the PDCCH, information associated with a SL resource allocated by the BS; identifying whether the SL resource is a resource for new transmission of a SL signal or a resource for re-transmission of the SL signal; when the SL resource is the resource for re-transmission of the SL signal, identifying whether a SL HARQ feedback is enabled for a SL HARQ process of the first UE; when the SL HARQ feedback is enabled, receiving, from a second UE, SL HARQ feedback information about a SL signal transmitted from the first UE to the second UE; reporting, to the BS, the received SL HARQ feedback information; and in response to the reporting, starting a SL HARQ RTT timer associated with the DRX.

According to an embodiment, the operating method of the first UE may further include, when the SL resource is the resource for new transmission of the SL signal, starting an inactivity timer associated with the DRX.

According to an embodiment, the operating method of the first UE may further include, when the SL HARQ feedback is not enabled, identifying whether to re-transmit the SL signal, based on a preconfigured value associated with re-transmission of the SL signal, and when it is determined that re-transmission of the SL signal is requested, starting a SL re-transmission timer associated with the DRX.

According to an embodiment, the SL re-transmission timer associated with the DRX may indicate a maximum time until the first UE obtains the resource allocated for re-transmission of the SL signal, and the SL re-transmission timer associated with the DRX may run for each SL HARQ process of the UE.

According to an embodiment, the operating method of the first UE may further include, when the first UE obtains the resource allocated for re-transmission of the SL signal, stopping the SL re-transmission timer associated with the DRX.

According to an embodiment, the SL HARQ RTT timer associated with the DRX may indicate a minimum time requested for the BS to process the reporting of information about the SL HARQ feedback transmitted by the first UE.

According to an embodiment, the SL HARQ RTT timer associated with the DRX may run for each SL HARQ process of the UE.

According to an embodiment, the active time associated with the DRX may include a time in which a scheduling request for the SL is transmitted on a physical uplink control channel (PUCCH).

According to an embodiment of the present disclosure, a first UE in a wireless communication system may include a transceiver, and at least one processor configured to, when the first UE is in an RRC connected state, is configured with DRX, and is configured with SL resource allocation mode 1, monitor a PDCCH transmitted from a BS during an active time associated with the DRX, detect, based on the monitoring of the PDCCH, information associated with a SL resource allocated by the BS, identify whether the SL resource is a resource for new transmission of a SL signal or a resource for re-transmission of the SL signal, when the SL resource is the resource for re-transmission of the SL signal, identify whether a SL HARQ feedback is enabled for a SL HARQ process of the first UE, when the SL HARQ feedback is enabled, receive, from a second UE via the transceiver, SL HARQ feedback information about a SL signal transmitted from the first UE to the second UE, report, to the BS via the transceiver, the received SL HARQ feedback information, and in response to the reporting, start a SL HARQ RTT timer associated with the DRX.

According to an embodiment, the at least one processor may be further configured to, when the SL resource is the resource for new transmission of the SL signal, start an inactivity timer associated with the DRX.

According to an embodiment, the at least one processor may be further configured to, when the SL HARQ feedback is not enabled, identify whether to re-transmit the SL signal, based on a preconfigured value associated with re-transmission of the SL signal, and when it is determined that re-transmission of the SL signal is requested, start a SL re-transmission timer associated with the DRX.

According to an embodiment, the SL re-transmission timer associated with the DRX may indicate a maximum time until the first UE obtains the resource allocated for re-transmission of the SL signal, and the SL re-transmission timer associated with the DRX may run for each SL HARQ process of the UE.

According to an embodiment, the at least one processor may be further configured to, when the first UE obtains the resource allocated for re-transmission of the SL signal, stop the SL re-transmission timer associated with the DRX.

According to an embodiment, the SL HARQ RTT timer associated with the DRX may indicate a minimum time requested for the BS to process the reporting of information about the SL HARQ feedback transmitted by the first UE, and the SL HARQ RTT timer associated with the DRX may run for each SL HARQ process of the UE.

According to an embodiment, the active time associated with the DRX may include a time in which a scheduling request for the SL is transmitted on a PUCCH.

The methods according to the embodiments of the present disclosure as described in claims or specification may be implemented as hardware, software, or a combination of hardware and software.

When implemented as software, a computer-readable storage medium or a computer program product which stores one or more programs (e.g., software modules) may be provided. The one or more programs stored in the computer-readable storage medium or the computer program product are configured for execution by one or more processors in an electronic device. The one or more programs include instructions directing the electronic device to execute the methods according to the embodiments of the present disclosure as described in the claims or the specification.

The programs (e.g., software modules or software) may be stored in non-volatile memory including random access memory (RAM) or flash memory, read only memory (ROM), electrically erasable programmable read only memory (EEPROM), a magnetic disc storage device, a compact disc (CD)-ROM, a digital versatile disc (DVD), another optical storage device, or a magnetic cassette. Alternatively, the programs may be stored in memory including a combination of some or all of the above-mentioned storage media. A plurality of such memories may be included.

In addition, the programs may be stored in an attachable storage device accessible through any or a combination of communication networks such as Internet, an intranet, a local area network (LAN), a wide LAN (WLAN), a storage area network (SAN), or the like. Such a storage device may access, via an external port, a device performing the embodiments of the present disclosure. Furthermore, a separate storage device on the communication network may access the electronic device performing the embodiments of the present disclosure.

In the present disclosure, the terms "computer program product" or "computer-readable recording medium" are used to totally indicate a medium such as a memory, a hard disc mounted in a hard disk drive, and a signal. The "computer program product" or the "computer-readable recording medium" is a means to be provided to the method of processing an SL operation in a DRX mode of a UE in a wireless communication system according to the present disclosure.

In the afore-described embodiments of the present disclosure, components included in the present disclosure are expressed in a singular or plural form according to the embodiments of the present disclosure. However, the singular or plural form is appropriately selected for convenience of descriptions and the present disclosure is not limited thereto. As such, a component expressed in a plural form may also be configured as a single component, and a component expressed in a singular form may also be configured as plural components.

Specific embodiments of the present disclosure are described in the descriptions of the present disclosure, but it will be understood that various modifications may be made without departing the scope of the present disclosure. Thus, the scope of the present disclosure is not limited to the embodiments described herein and should be defined by the appended claims and their equivalents.

## Claims

1. An operating method of a first user equipment (UE) in a wireless communication system, the operating method comprising:
when the first UE is in an radio resource control (RRC) connected state, is configured with discontinuous reception (DRX), and is configured with sidelink (SL) resource allocation mode 1, monitoring a physical downlink control channel (PDCCH) transmitted from a base station (BS) during an active time associated with the DRX;
detecting, based on the monitoring of the PDCCH, information associated with a SL resource allocated by the BS;
identifying whether the SL resource is a resource for new transmission of a SL signal or a resource for re-transmission of the SL signal;
when the SL resource is the resource for re-transmission of the SL signal, identifying whether a SL hybrid automatic repeat request (HARQ) feedback is enabled for a SL HARQ process of the first UE;
when the SL HARQ feedback is enabled, receiving, from a second UE, SL HARQ feedback information about a SL signal transmitted from the first UE to the second UE;
reporting, to the BS, the received SL HARQ feedback information; and
in response to the reporting, starting a SL HARQ round trip time (RTT) timer associated with the DRX.

2. The operating method of claim 1, further comprising, when the SL resource is the resource for new transmission of the SL signal, starting an inactivity timer associated with the DRX.

3. The operating method of claim 1, further comprising:
when the SL HARQ feedback is not enabled, identifying whether to re-transmit the SL signal, based on a preconfigured value associated with re-transmission of the SL signal; and
when it is determined that re-transmission of the SL signal is requested, starting a SL re-transmission timer associated with the DRX.

4. The operating method of claim 3, wherein
the SL re-transmission timer associated with the DRX indicates a maximum time until the first UE obtains the resource allocated for re-transmission of the SL signal, and
the SL re-transmission timer associated with the DRX runs for each SL HARQ process of the first UE.

5. The operating method of claim 4, further comprising, when the first UE obtains the resource allocated for re-transmission of the SL signal, stopping the SL re-transmission timer associated with the DRX.

6. The operating method of claim 1, wherein the SL HARQ RTT timer associated with the DRX indicates a minimum time requested for the BS to process the reporting of information about the SL HARQ feedback transmitted by the first UE.

7. The operating method of claim 1, wherein the SL HARQ RTT timer associated with the DRX runs for each SL HARQ process of the first UE.

8. The operating method of claim 1, wherein the active time associated with the DRX comprises a time in which a scheduling request for a SL is transmitted on a physical uplink control channel (PUCCH).

9. A first user equipment (UE) in a wireless communication system, the first UE comprising:
a transceiver; and
at least one processor configured to, when the first UE is in an radio resource control (RRC) connected state, is configured with discontinuous reception (DRX), and is configured with sidelink (SL) resource allocation mode 1, monitor a physical downlink control channel (PDCCH) transmitted from a base station (BS) during an active time associated with the DRX,
detect, based on the monitoring of the PDCCH, information associated with a SL resource allocated by the BS,
identify whether the SL resource is a resource for new transmission of a SL signal or a resource for re-transmission of the SL signal,
when the SL resource is the resource for re-transmission of the SL signal, identify whether a SL hybrid automatic repeat request (HARQ) feedback is enabled for a SL HARQ process of the first UE,
when the SL HARQ feedback is enabled, receive, from a second UE via the transceiver, SL HARQ feedback information about a SL signal transmitted from the first UE to the second UE,
report, to the BS via the transceiver, the received SL HARQ feedback information, and
in response to the reporting, start a SL HARQ round trip time (RTT) timer associated with the DRX.

10. The first UE of claim 9, wherein the at least one processor is further configured to, when the SL resource is the resource for new transmission of the SL signal, start an inactivity timer associated with the DRX.

11. The first UE of claim 9, wherein the at least one processor is further configured to,
when the SL HARQ feedback is not enabled, identify whether to re-transmit the SL signal, based on a preconfigured value associated with re-transmission of the SL signal, and
when it is determined that re-transmission of the SL signal is requested, start a SL re-transmission timer associated with the DRX.

12. The first UE of claim 11, wherein
the SL re-transmission timer associated with the DRX indicates a maximum time until the first UE obtains the resource allocated for re-transmission of the SL signal, and
the SL re-transmission timer associated with the DRX runs for each SL HARQ process of the first UE.

13. The first UE of claim 12, wherein the at least one processor is further configured to, when the first UE obtains the resource allocated for re-transmission of the SL signal, stop the SL re-transmission timer associated with the DRX.

14. The first UE of claim 9, wherein
the SL HARQ RTT timer associated with the DRX indicates a minimum time requested for the BS to process the reporting of information about the SL HARQ feedback transmitted by the first UE, and
the SL HARQ RTT timer associated with the DRX runs for each SL HARQ process of the first UE.

15. The first UE of claim 9, wherein the active time associated with the DRX comprises a time in which a scheduling request for a SL is transmitted on a physical uplink control channel (PUCCH).
